# EUROPÄISCHE PATENTSCHRIFT

(11) **EP 1 085 999 B1**
(45) Veröffentlichungstag und Bekanntmachung des Hinweises auf die Patenterteilung: **17.04.2002**
(21) Anmeldenummer: 99924913.9
(22) Anmeldetag: 10.05.1999
(51) Int. Cl.: B60R 1/06, B60Q 3/02

(54) **FAHRZEUGSPIEGEL**
AUTOMOBILE MIRROR
RETROVISEUR DE VEHICULE

(30) Priorität: 10.06.1998 DE 29810522 U
(43) Veröffentlichungstag der Anmeldung: 28.03.2001
(73) Patentinhaber: Magna Reflex Holding GmbH, 97959 Assamstadt (DE)
(72) Erfinder: JURASCHEK, Peter, D-74385 Pleidesheim (DE)
(74) Vertreter: Butenschön, Antje, Dr.
(86) Internationale Anmeldenummer: EP9903172
(87) Internationale Veröffentlichungsnummer: WO9964270

(56) Entgegenhaltungen:
- EP-A- 0 842 819
- WO-A-90/10555
- DE-U- 29 607 691
- DE-U- 29 618 937

## Beschreibung

Die vorliegende Erfindung betrifft einen Fahrzeugspiegel nach dem Oberbegriff des Hauptanspruchs.

Es sind Fahrzeugspiegel bekannt, welche aus zwei zusammengefügten Grundteilen aufgebaut sind, wobei das eine Grundteil ein an einem Fahrzeug befestigter Spiegelrahmen und das andere Grundteil eine Spiegelrahmenverkleidung ist und beide Grundteile jeweils starr mit den Grundteilen verbundene, komplementäre Steckteile einer zum Beispiel elektrischen Steckverbindung aufweisen.

Solche Fahrzeugspiegel nach dem Stand der Technik weisen den Nachteil auf, daß beim Fügen der beiden Grundteile die Grundteile bzw. die daran starr befestigten Steckteile genau aufeinander ausgerichtet werden müssen, damit die Steckverbindung tatsächlich hergestellt wird. Dies wird oft dadurch erschwert, daß der Bereich der Steckverbindung meist nicht einsehbar ist, da er durch die Spiegelrahmenverkleidung verdeckt wird. Hinzu kommt die Problematik der Fügetoleranzen. Bereits bei kleinen Maßabweichungen bzw. fehlerhafter Ausrichtung der Steckteile wird das Fügen erschwert oder durch Verkantungen unmöglich bzw. kann es sogar zu einer Beschädigung der Steckteile kommen.

Aus der DE 296 07 691 U1 ist ein Fahrzeugaußenspiegel mit einteiligem Spiegelgehäuse und integrierter Positionslampe bzw. Blinkerleuchte bekannt. Die Steckverbindung für die Stromversorgung muß manuell positioniert und eingeführt werden.

Ausgehend von diesem Stand der Technik ist es die Aufgabe der vorliegenden Erfindung, auch ohne ein genaues Ausrichten von einem Spiegelrahmen und einer Spiegelrahmenverkleidung, welche jeweils komplementäre Steckteile einer Steckverbindung aufweisen, stets das sichere und einfache Fügen der Steckverbindung zu gewährleisten.

Diese Aufgabe wird mit einem Fahrzeugspiegel nach dem Oberbegriff des Hauptanspruchs in Verbindung mit den kennzeichnenden Merkmalen des Hauptanspruchs gelöst.

Dadurch, daß das eine Steckteil an einem an dem einen Grundteil beweglich gelagerten Gleitstück und das andere Steckteil an dem anderen Grundteil befestigt sind, wobei beim Zusammenfügen der Grundteile das Gleitstück unter elastischer Vorspannung auf einer Gleitbahn des anderen Grundteils gleitet und die Gleitbahn und das Gleitstück so ausgebildet sind, daß beim Zusammenfügen der Grundteile die Steckteile miteinander in Eingriff kommen, ist auch ohne in genaues Ausrichten der Grundteile das sichere und einfache Fügen einer aus den Steckteilen bestehenden Steckverbindung gewährleistet. Durch die federnde, bewegliche Lagerung des Gleitstücks, welches das eine Steckteil trägt, können Verkantungen und fehlerhafte Ausrichtungen beider Grundteile zueinander stets ausgeglichen werden. Unabhängig von Ausrichtfehlern beim Zusammenfügen der Grundteile bleibt das an dem einen Grundteil befestigte Gleitstück stets auf der Gleitbahn des anderen Grundteils und ermöglicht damit eine sichere Führung des einen Steckteils auf das andere Steckteil hin, um eine Steckverbindung herzustellen.

Die Erfindung sieht vor, daß das Gleitstück mit dem einen Steckteil entweder an dem Spiegelrahmen oder an der Spiegelrahmenverkleidung vorgesehen wird, das andere Steckteil wird dann an dem jeweils anderen Grundteil befestigt. Unabhängig von dieser Zuordnung bleibt jedoch durch das federnd bewegliche Gleitstück stets die Ausrichtung beider Steckteile zueinander erhalten.

Vorteilhafte Weiterbildungen der vorliegenden Erfindung werden in den abhängigen Ansprüchen angegeben.

Eine vorteilhafte Weiterbildung der Erfindung sieht vor, daß das Gleitstück, welches das eine Steckteil trägt, über einen Einführungsfinger verfügt und das Grundteil, welches das andere Steckteil trägt, korrespondierende Einführungsrippen aufweist. Der Einführungsfinger und die korrespondierenden Einführungsrippen bilden hierbei eine zusätzliche Einführhilfe, welche, zum Beispiel bei einem leichten seitlichen Abweichen des Gleitstücks von der Gleitbahn, trotzdem eine sichere Zuordnung beider Steckteile gewährleistet. Somit können in Verbindung mit einer solchen zusätzlichen Einführhilfe auch sehr große Ausrichtfehler korrigiert werden.

Eine besonders vorteilhafte Weiterbildung sieht vor, daß das eine Steckteil im wesentlichen fingerförmig und das andere Steckteil trichterförmig ausgebildet ist. Hierdurch wird eine weitere Einführhilfe zur Verfügung gestellt, welche Verkantungen verhindert und durch das einfache Hineingleiten des fingerförmig ausgeführten einen Steckteils ein besonders kraftarmes Herstellen der Steckverbindung und damit eine sehr geringe mechanische Belastung der Steckteile bzw. des Gleitstücks sicherstellt.

Weitere vorteilhafte Ausführungsformen der vorliegenden Erfindung werden in den übrigen abhängigen Ansprüchen angegeben.

Die vorliegende Erfindung wird im folgenden anhand von Figuren erläutert. Es zeigen:
- Fign. 1a und 1b: Seitenansichten von erfindungsgemäßen Steckteilen im gefügten und ungefügten Zustand,
- Fign. 2a und 2b: Ansichten eines erfindungsgemäßen Gleitstücks,
- Fign. 3a und 3b: Draufsichten der erfindungsgemäßen Steckteile im ungefügten und gefügten Zustand.

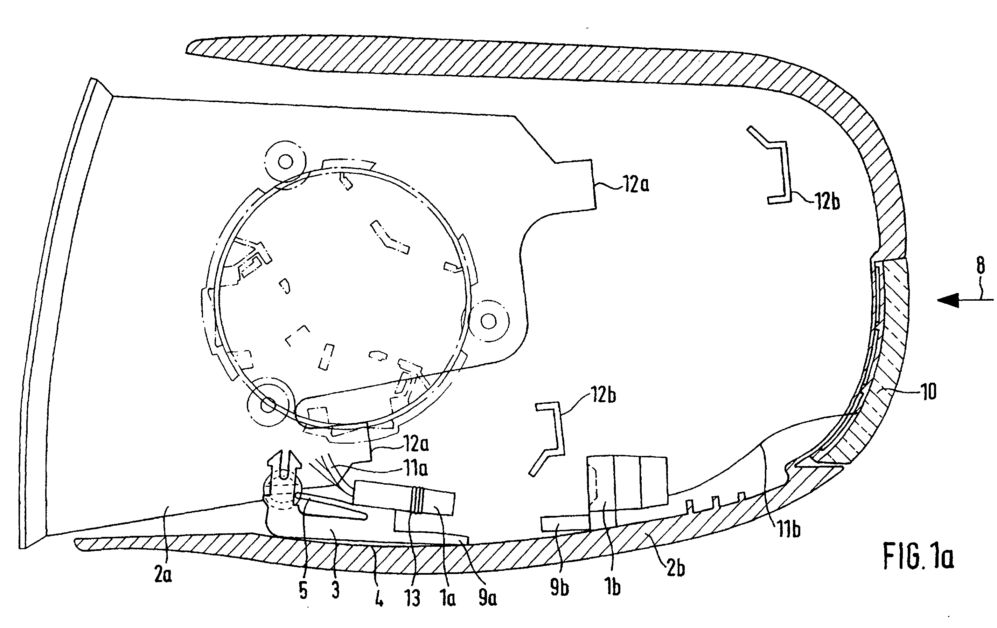

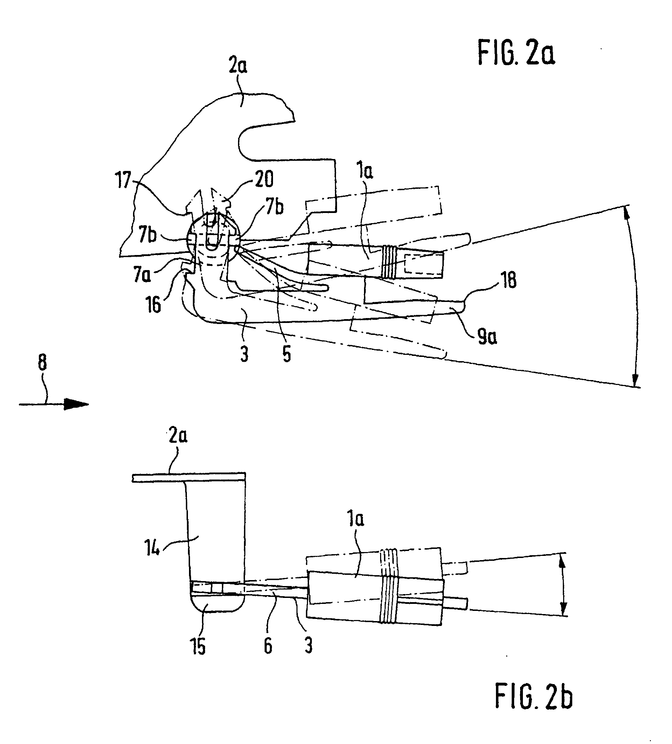

Fig. 1a zeigt ein als Spiegelrahmen ausgeführtes Grundteil 2a. Fig. 1a zeigt den Spiegelrahmen aus der Perspektive eines im Fahrzeug befindlichen Insassen, aus Übersichtlichkeitsgründen ist ein an dem Spiegelrahmen befestigtes Spiegelglas jedoch nicht dargestellt. An dem Spiegelrahmen 2a ist ein Gleitstück 3 beweglich gelagert (auf die Art der Lagerung wird weiter unten, bei der Beschreibung von Fign. 2a und 2b, detailliert eingegangen). Das Gleitstück 3 ist in der Hochachse längsverschieblich sowie in der Blattebene kippbar angeordnet. Ein zu dem Gleitstück 3 gehörendes Federelement 5, welches als aus dem Gleitstück 3 herausragender Träger ausgeführt ist, greift mit dem freien Ende an dem Spiegelrahmen 2a an. Durch diesen Eingriff wird das Gleitstück in Fig. 1a nach unten, das heißt auf eine Innenkontur des als Spiegelrahmenverkleidung ausgeführten Grundteils 2b gedrückt. Gleichzeitig wird durch diesen Eingriff ein Drehmoment am Gleitstück 3 erzeugt, welches den Einführungsfinger 9a ebenfalls auf die Innenkontur der Spiegelrahmenverkleidung 2b preßt. Das Gleitstück 3 trägt außerdem ein Steckteil 1a, welches über elektrische Leitungen 11a mit der Spannungsversorgung des Kraftfahrzeugs verbunden ist.

Bei der Montage des Fahrzeugspiegels wird die Spiegelrahmenverkleidung 2b auf den Spiegelrahmen 2a aufgesteckt. Dabei wird die Spiegelrahmenverkleidung 2b grob bezüglich des Spiegelrahmens 2a ausgerichtet, so daß die korrespondierenden Eingreifelemente 12a des Spiegelrahmens und 12b der Spiegelrahmenverkleidung miteinander in Eingriff kommen (eine solche grobe Ausrichtung der beiden Grundteile ist jedoch nicht ausreichend für das genaue Ausrichten des Steckteils 1a, da bei einer festen Lagerung des Steckteils 1a an dem Spiegelrahmen 2a bereits kleinste Lageveränderungen des Steckteils 1a bezüglich des Spiegelrahmens 2a zu Ungenauigkeiten bzw. zur Unmöglichkeit des Fügens einer Steckverbindung führen würden).

Bei dem Aufschieben der Spiegelrahmenverkleidung 2b auf den Spiegelrahmen 2a gleitet das Gleitstück 3 auf der Innenkontur (einer Gleitbahn 4) der Spiegelrahmenverkleidung 2b ab. Das Aufschieben erfolgt hierbei im wesentlichen in Montage- bzw. Steckrichtung 8. Das Gleitstück 3 läuft solange auf der Gleitbahn 4 ab, bis das Steckteil 1a in das Steckteil 1b geführt ist und mittels nicht näher dargestellter Kontakte eine elektrische Verbindung zwischen den Kabeln 11a und 11b besteht. Mittels dieser Kabel erfolgt die Spannungsversorgung eines an der Spiegelrahmenverkleidung befestigten Blinkers 10. Es ist selbstverständlich möglich, mit dem Kabel auch andere Verbraucher mit Spannung zu versorgen, zum Beispiel den Empfänger einer ferngesteuerten Zentralverriegelung des Fahrzeugs, Teile einer Alarmanlage etc.

Beim Aufstecken der Spiegelrahmenverkleidung 2b sind leichte Verdrehungen bzw. Verkantungen oder Höhenunterschiede zwischen Spiegelrahmenverkleidung 2b und Spiegelrahmen 2a durchaus zulässig, da aufgrund der elastischen Längsführung des Gleitstückes 3 dieses stets auf die Gleitbahn 4 der Spiegelrahmenverkleidung gepreßt wird.

Es ist selbstverständlich auch möglich, eine "kinematische Umkehr" durchzuführen, das heißt das Steckteil 1b an dem Spiegelrahmen 2a und das Gleitstück 3 mit dem Steckteil 1a an der Spiegelrahmenverkleidung 2b anzubringen.

Sollten im allernächsten Annäherungsbereich der Steckteile 1a und 1b, etwa aufgrund eines Abweichens des Gleitstücks 3 von der Gleitbahn 4, unvorhergesehene Positionsabweichungen der einzelnen Steckteile zueinander bestehen, tritt auch durch die "selbstfindende" Kontur des Steckteils 1a bzw. des Steckteils 1b trotzdem eine sichere Herstellung der Verbindung auf. Das Steckteil 1a ist im wesentlichen stabförmig bzw. fingerförmig ausgeführt, das Steckteil 1b enthält einen Einlauftrichter mit quadratischem Querschnitt bzw. mit rotationssymmetrischem Querschnitt. Diese Paarung ermöglicht stets ein Abgleiten des Steckteils 1a an dem in 1b ausgeführten Trichter und damit auch bei leichten Ausrichtfehlern ein Herstellen der Steckerverbindung. Es ist jedoch selbstverständlich möglich, in analoger Weise das Steckteil 1a trichterförmig und das Steckteil 1b fingerförmig auszuführen.

Zur Herstellung einer besonders wasser- bzw. schmutzdichten Verbindung zwischen dem Steckteil 1a und dem Steckteil 1b verfügt das Steckteil 1a, welches fingerförmig ausgeführt ist, über mehrere umlaufende Abdichtungsrippen 13. Hiermit wird der elektrische Kontaktbereich der Steckverbindung, der durch nicht dargestellte, im Inneren des Steckteils 1a bzw. 1b befindliche Kontakte hergestellt wird, geschützt. Beide Steckteile 1a, 1b überlappen sich im gefügten Zustand teilweise, die Abdichtungsrippen 13 sind im gefügten Zustand der Steckverbindung in dem sich überlappenden Bereich beider Steckteile angeordnet. Eine solche erfindungsgemäße Abdichtung ist besonders bei elektrischen Verbindungen sinnvoll. Wird die Steckverbindung als optische, elektrische, hydraulische oder mechanische Verbindung ausgeführt, kann im Einzelfall auch auf eine solche Abdichtung verzichtet werden.

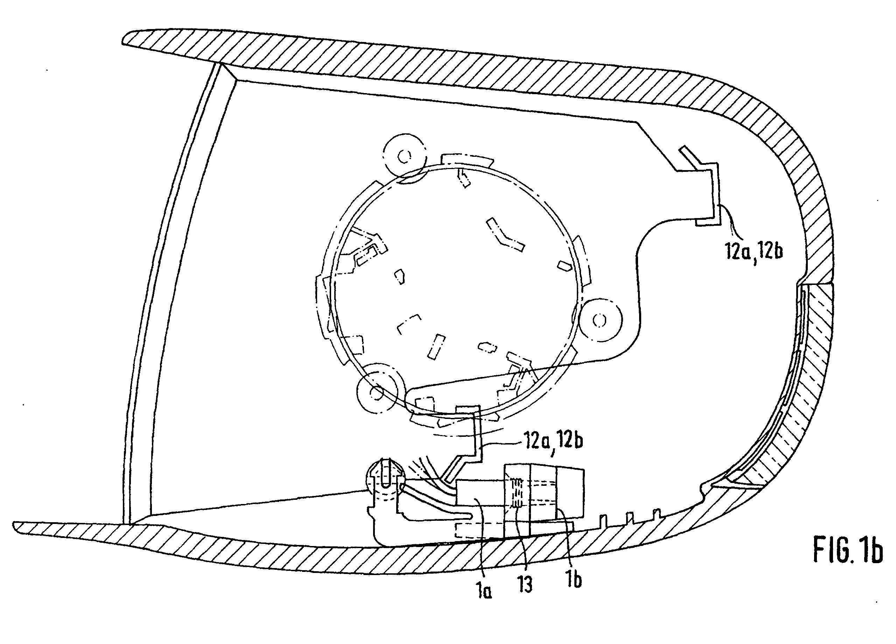

Fig. 1b zeigt die Teile aus Fig. 1a im gefügten Zustand, hierbei sind auch die in dem Überlappungsbereich der Steckteile 1a und 1b angeordneten Abdichtungsrippen 13 dargestellt. In diesem gefügten Zustand sind außerdem die Eingreifelemente 12a des Spiegelrahmens und 12b der Spiegelrahmenverkleidung miteinander in Eingriff, die Fixierung der Spiegelrahmenverkleidung am Spiegelrahmen erfolgt über nicht näher dargestellte Fixierelemente.

Fig. 2a zeigt eine Detailansicht eines Gleitstücks 3 in verschiedenen Auslenkungs- bzw. Schwenkstellungen. Das Gleitstück 3 ist in einer Halterung 14, welche aus dem Grundteil 2a herausragt, geführt. Die Halterung 14 ist im wesentlichen tonnenförmig ausgeführt. Im Bereich des Deckels 15 ist die Halterung 14 oben und unten eingeschlitzt, so daß der Deckel 15 (besser zu sehen in Fig. 2b) lediglich über einen schmalen Steg 7b mit dem Rest der Halterung 14 verbunden ist. Im eingeschlitzten Bereich der Halterung 14 ist das Gleitstück 3 mit einer Führungsfläche 7a längenverschieblich geführt. Ein unterer Anschlag 16 sowie ein oberer Anschlag 17 der Führungsfläche 7a verhindern ein Herausrutschen des Gleitstücks 3 aus der Halterung. An dem freien Ende des Gleitstücks 3, an welchem sich auch der Anschlag 17 befindet, ist das Gleitstück 3 mittig geschlitzt und weist Rastnasen 20 auf. Diese hintergreifen den Steg 7b der Halterung. Das zu dem Gleitstück 3 gehörende Federelement 5 preßt ebenfalls auf einen Steg 7b. Wird das Gleitstück 3 in Fig. 2a nach oben geschoben (es kommt zu einer Verschiebung der Führungsfläche 7a bezüglich der Halterung 14), so erzeugt das Federelement 5 eine nach unten gerichtete Gegenkraft. Eine solche Gegenkraft entsteht ebenfalls, wenn der Einführungsfinger 9a in Fig. 2a nach oben gekippt wird. Wirken keine äußeren Einflüsse auf das Gleitstück 3 ein, so ergibt sich die mit Bezugszeichen 18 bezeichnete Normalstellung.

Fig. 2b zeigt eine Draufsicht des Gleitstücks 3 aus Fig. 2a. Es ist deutlich zu sehen, daß aufgrund des elastischen Abschnittes 6 des Gleitstückes 3 eine Bewegung des Steckteils 1a quer zur Steckrichtung 8 auch in dieser Ebene möglich ist.

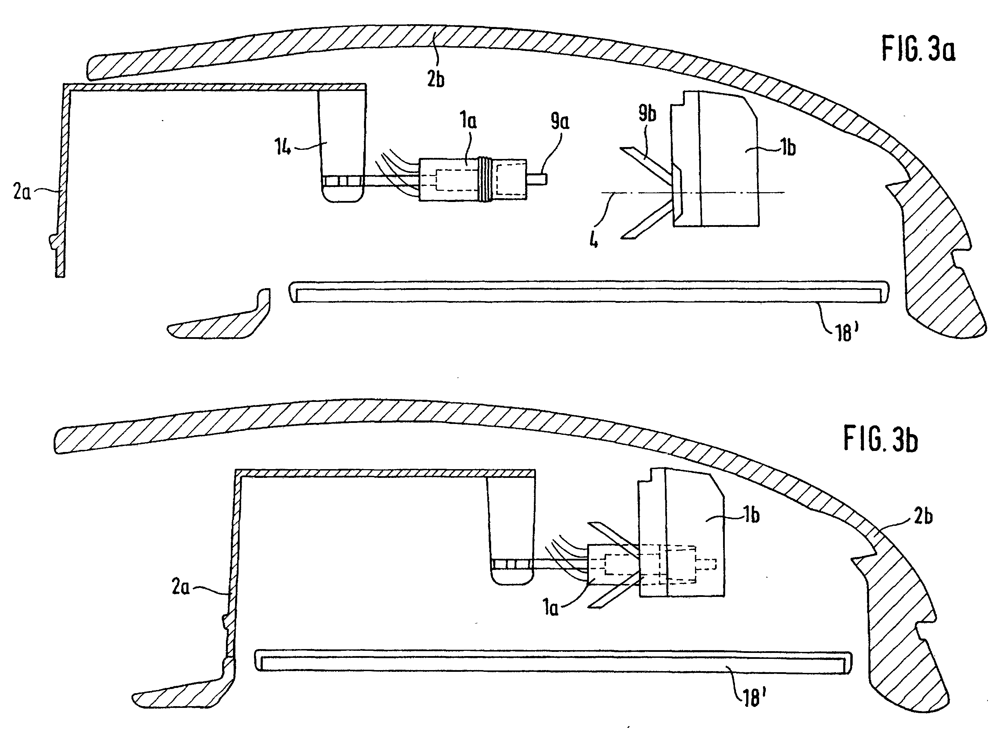

Fig. 3a zeigt eine Draufsicht der Vorrichtung aus Fig. 1a. Hierin ist auch das Spiegelglas 18' im Schnitt zu erkennen. Im Endbereich der Gleitbahn 4 sind im wesentlichen strahlenförmig zu den Seiten abstehende Einführungsrippen 9b angeordnet. Diese sind zur Aufnahme eines Einführungsfingers 9a angeordnet, welcher an den Einführungsrippen 9b abgleitet und somit das Steckteil 1a in das Steckteil 1b hineinführt. Aufgrund der in Fig. 2b gezeigten Querelastizität des Gleitstücks 3 kann das Steckteil 1a auch bei leichten Ausrichtfehlern in Querrichtung in das Steckteil 1b gesteckt werden, ohne daß es zu Verkantungen zwischen dem Spiegelrahmen 2a bzw. der Halterung 14 oder dem Gleitstück 3 sowie der Spiegelrahmenhalterung 2b kommt.

Es ist selbstverständlich auch möglich, die Einführungsrippen 9b fest an dem Gleitstück 3 anzubringen und den Einführungsfinger 9a fest an dem Steckteil 1b anzubringen.

Fig. 3b zeigt die Teile aus Fig. 3a im gefügten Zustand. Der Einführungsfinger 9a liegt hierbei in einer nicht dargestellten, zwischen den Einführungsrippen 9b klaffenden Öffnung.

## Patentansprüche

1. Fahrzeugspiegel, der aus zwei zusammengefügten Grundteilen aufgebaut ist, wobei das eine Grundteil ein an einem Fahrzeug befestigter Spiegelrahmen und das andere Grundteil eine Spiegelrahmenverkleidung ist und beide Grundteile komplementäre Steckteile einer Steckverbindung aufweisen,
**dadurch gekennzeichnet ,**
**daß** das eine Steckteil (1a) an einem an dem einen Grundteil (2a) beweglich gelagerten Gleitstück (3) und das andere Steckteil (1b) an dem anderen Grundteil (2b) befestigt sind, wobei beim Zusammenfügen der Grundteile (2a,2b) das Gleitstück (3) unter elastischer Vorspannung auf einer Gleitbahn (4) des anderen Grundteils (2b) gleitet und die Gleitbahn (4) und das Gleitstück (3) so ausgebildet sind, daß beim Zusammenfügen der Grundteile (2a,2b) die Steckteile (1a,1b) miteinander in Eingriff kommen.

2. Fahrzeugspiegel nach Anspruch 1, **dadurch gekennzeichnet, daß** das Gleitstück (3) elastische Abschnitte (6) und/oder Einheiten (7a) zum Längenausgleich und zum Verschwenken des einen Steckteils (1a) in zwei im wesentlichen senkrecht zueinander angeordneten, in der Ebene senkrecht zu der Steckrichtung (8) der Steckverbindung befindlichen Richtungen, aufweist.

3. Fahrzeugspiegel nach mindestens einem der vorhergehenden Ansprüche, **dadurch gekennzeichnet, daß** das Gleitstück (3) mit einer Schnappverbindung (7b,20) mit Längenausgleich (7a,7b) an einem der Grundteile (2a) befestigt ist.

4. Fahrzeugspiegel nach mindestens einem der vorhergehenden Ansprüche, **dadurch gekennzeichnet, daß** das Gleitstück (3) mit einem Federelement (5) zum Andrücken des Gleitstücks (3) auf die Gleitbahn (4) verbunden ist.

5. Fahrzeugspiegel nach Anspruch 4, **dadurch gekennzeichnet, daß** das Federelement (5) als elastischer Abschnitt des Gleitstücks (3) ausgeführt ist.

6. Fahrzeugspiegel nach mindestens einem der vorhergehenden Ansprüche, **dadurch gekennzeichnet, daß** die Gleitbahn (4) als Innenkontur eines der Grundteile (2b) ausgeführt ist.

7. Fahrzeugspiegel nach mindestens einem der vorhergehenden Ansprüche, **dadurch gekennzeichnet, daß** das das eine Steckteil (1a) tragende Gleitstück (3) einen Einführungsfinger (9a) und das das andere Steckteil (1b) tragende Grundteil (2b) korrespondierende Einführungsrippen (9b) aufweist.

8. Fahrzeugspiegel nach mindestens einem der Ansprüche 1 bis 6, **dadurch gekennzeichnet, daß** das das eine Steckteil (1a) tragende Gleitstück (3) Einführungsrippen und das das andere Steckteil (1b) tragende Grundteil einen korrespondierenden Einführungsfinger aufweist.

9. Fahrzeugspiegel nach mindestens einem der vorhergehenden Ansprüche, **dadurch gekennzeichnet, daß** das eine Steckteil (1a) im wesentlichen fingerförmig und das andere Steckteil (1b) trichterförmig ausgebildet ist.

10. Fahrzeugspiegel nach mindestens einem der vorhergehenden Ansprüche, **dadurch gekennzeichnet, daß** beide Steckteile (1a,1b) sich im gefügten Zustand zumindest teilweise überlappen und mindestens ein Steckteil (1a) über in Ebenen senkrecht zur Steckrichtung (8) umlaufende Abdichtungsrippen (13) verfügt, welche im gefügten Zustand der Steckverbindung in einem sich überlappenden Bereich beider Steckteile (1a,1b) angeordnet sind.

11. Fahrzeugspiegel nach mindestens einem der vorhergehenden Ansprüche, **dadurch gekennzeichnet, daß** die Steckverbindung eine optische, elektrische, hydraulische oder eine mechanische Leistung übertragende Verbindung ist.

12. Fahrzeugspiegel nach mindestens einem der vorhergehenden Ansprüche, **dadurch gekennzeichnet, daß** die Spiegelrahmenverkleidung (2b) zum Beispiel einen Fahrtrichtungsanzeiger (10) umfaßt und die Steckverbindung (1a,1b) eine elektrische Verbindung zur Spannungsversorgung des Fahrtrichtungsanzeigers ist.

## Claims

1. A vehicle mirror constructed of two joined base parts, wherein one base part is a mirror frame secured to a vehicle and the other base part is a mirror frame covering and both base parts comprise complementary plug-in parts of a plug-type connection,
**characterized in that** said one plug-in part (1a) is secured to a sliding block (3) movably supported on said one base part (2a) and said other plug-in part (1b) is secured to the other base part (2b), wherein said sliding block (3) slides resiliently biased on a slide way (4) of said other base part (2b) during joining the base parts (2a, 2b), and the slide way (4) and the sliding block (3) are formed such that said plug-in parts (1a, 1b) engage each other during joining the base parts (2a, 2b).

2. A vehicle mirror according to claim 1, **characterized in that** said sliding block (3) comprises resilient portions (6) and/or components (7a) for a length compensation and for horizontal swing of said one plug-in part (1a) in two directions essentially being perpendicularly disposed to each other in a plane being perpendicularly to the plug-in direction (8) of said plug-type connection.

3. A vehicle mirror according to at least any one of the preceding claims, **characterized in that** said sliding block (3) is secured to one of said base parts (2a) with a snap connection (7b, 20) having a length compensation (7a, 7b).

4. A vehicle mirror according to at least any one of the preceding claims, **characterized in that** said sliding block (3) is connected to a spring element (5) for pressing said sliding block (3) against said slide way (4).

5. A vehicle mirror according to claim 4, **characterized in that** said spring element (5) is constructed as a resilient portion of said sliding block (3).

6. A vehicle mirror according to at least any one of the preceding claims, **characterized in that** said slide way (4) is constructed as an inner contour of one of said base parts (2b).

7. A vehicle mirror according to at least any one of the preceding claims, **characterized in that** said one sliding block (3) supporting said one plug-in part (1a) comprises an inserting finger (9a) and said base part (2b) supporting said other plug-in part (1b) comprises corresponding leading-in ribs (9b).

8. A vehicle mirror according to at least any one of claims 1 to 6, **characterized in that** said sliding block (3) supporting said one plug-in part (1a) comprises leading-in ribs and said base part supporting said other plug-in part (1b) comprises a corresponding inserting finger.

9. A vehicle mirror according to at least any one of the preceding claims, **characterized in that** said one plug-in part (1a) is substantially formed finger-type and said other plug-in part (1b) is formed funnel-shaped.

10. A vehicle mirror according to at least any one of the preceding claims, **characterized in that** said both plug-in parts (1a, 1b) at least partially overlap in joined condition, and at least one plug-in part (1a) comprises sealing ribs (13) encircling in planes being perpendicularly to the plug-in direction (8), which are disposed in an overlapping area of said two plug-in parts (1a, 1b), in joined condition of the plug-type connection.

11. A vehicle mirror according to at least any one of the preceding claims, **characterized in that** said plug-type
connection is a linkage transferring an optical, electric, hydraulic or a mechanical power.

12. A vehicle mirror according to at least any one of the preceding claims, **characterized in that**, for example, said mirror frame covering (2b) includes one direction indicator (10) and said plug-type connection (1a, 1b) is an electric connection for a power supply of the direction indicator.

## Revendications

1. Rétroviseur de véhicule, composé de deux parties de base assemblées, dans lequel une partie de base est un cadre de rétroviseur fixé à un véhicule et l'autre partie de base est un revêtement de cadre de rétroviseur et les deux parties de base comportent des pièces de raccordement complémentaires d'une liaison de raccordement, **caractérisé en ce qu'**une pièce de raccordement (1a) est fixée à une pièce coulissante (3) montée mobile sur une partie de base (2a) et l'autre pièce de raccordement (1b) est fixée à l'autre pièce de raccordement (2b), **en ce que** lors de l'assemblage des parties de base (2a, 2b) la pièce coulissante (3) coulisse sous une précontrainte élastique sur une glissière (4) de l'autre partie de base (2b), et la glissière (4) ainsi que la pièce coulissante (3) sont agencées de façon que lors de l'assemblage des parties de base (2a, 2b), les pièces de raccordement (1a, 1b) viennent en prise mutuelle.

2. Rétroviseur selon la revendication 1, **caractérisé en ce que** la pièce coulissante (4) comporte des pattes élastiques (6) et/ou des unités (7a) pour l'équilibrage en longueur et le pivotement d'une pièce de raccordement (1a) dans deux directions sensiblement perpendiculaires l'une à l'autre, et s'étendant dans le plan perpendiculaire à la direction de raccordement (8) de la liaison de raccordement.

3. Rétroviseur de véhicule selon au moins l'une des revendications précédentes, **caractérisé en ce que** la pièce coulissante (3) est fixée à l'une des parties de base (2a) par une liaison d'encliquetage (7b, 20) avec équilibrage en longueur (7a, 7b).

4. Rétroviseur de véhicule selon au moins l'une des revendications précédentes, **caractérisé en ce que** la pièce coulissante (3) est reliée à un élément élastique (5) pour presser la pièce coulissante (3) sur la glissière (4).

5. Rétroviseur de véhicule selon la revendication 4, caractérisé en ce l'élément élastique (5) est réalisé sous la forme d'une patte élastique de la pièce coulissante (3).

6. Rétroviseur de véhicule selon au moins l'une des revendications précédentes, **caractérisé en ce que** la glissière (4) est réalisée sous la forme d'un contour intérieur de l'une (2b) des parties de base.

7. Rétroviseur de véhicule selon au moins l'une des revendications précédentes, **caractérisé en ce que** la pièce coulissante (3) portant une pièce de raccordement (1a) comporte un doigt d'introduction (9a), et la partie de base (2b) portant l'autre pièce de raccordement (1b) comprend des nervures d'introduction correspondantes (9b).

8. Rétroviseur de véhicule selon au moins l'une des revendications 1 à 6, **caractérisé en ce que** la pièce coulissante (3) portant l'une (1a) des pièces de raccordement comporte des nervures d'introduction, et la partie de base (1 b) portant l'autre pièce de raccordement (1b) comporte un doigt d'introduction correspondant.

9. Rétroviseur de véhicule selon a moins l'une des revendications précédentes, **caractérisé en ce que** l'une (1a) des pièces de raccordement est agencée essentiellement en forme de doigt, et l'autre pièce de raccordement (1b) est en forme d'entonnoir.

10. Rétroviseur de véhicule selon au moins l'une des revendications précédentes, caractérisé en ce les deux pièces de raccordement (1a, 1b) se chevauchent au moins partiellement à l'état assemblé, en ce qu'au moins une pièce de raccordement (1a) est pourvue de nervures d'étanchéité (13) s'étendant dans des plans perpendiculaires à la direction de raccordement (8), et en ce que ces nervures d 'étanchéité sont agencées , à l'état assemblé de la liaison de raccordement, dans une zone de chevauchement mutuel des deux pièces de raccordement (1a, 1b).

11. Rétroviseur de véhicule selon au moins l'une des revendications précédentes, **caractérisé en ce que** la liaison de raccordement est une liaison transmettant une puissance optique , électrique, hydraulique, ou mécanique.

12. Rétroviseur de véhicule selon au moins l'une des revendications précédentes, **caractérisé en ce que** le revêtement (2b) du rétroviseur de véhicule comprend par exemple un indicateur (10) de changement de direction, et la liaison de raccordement (1a, 1b) est une liaison électrique pour l'alimentation en courant de l'indicateur de changement de direction.
